# EUROPEAN PATENT APPLICATION

(11) **EP 4 538 642 A1**
(43) Date of publication of application: **16.04.2025**
(21) Application number: 23212446.1
(22) Date of filing: 27.11.2023
(51) Int. Cl.: G01C 21/00

(54) **SYSTEMS AND METHODS FOR CORRECTING MAPS**

(30) Priority: 12.10.2023 IN 202311068807
(71) Applicant: TomTom Global Content B.V., 1011 AC Amsterdam (NL)
(72) Inventor: RATHOD, Sagar Gangakisan, 1011 AC Amsterdam (NL); PANCHANI, Ravi, 1011 AC Amsterdam (NL); CHAWDA, Chandan Shyamsundar, 1101 AC Amsterdam (NL)
(74) Representative: Meier, Florian

(57) **Abstract**

A method is provided for identifying changes in road geometry, comprising obtaining an image of an initial road geometry for a geographical area, obtaining an image of movement data for the geographical area, forming a composite image from at least the image of initial road geometry and the image of movement data and generating an image of road geometry corrections by applying a trained road geometry correction model to the composite image, wherein the image of road geometry corrections identifies one or more differences between the actual road geometry of the geographical area and the initial road geometry. A method of training a suitable road geometry correction model is also described.

## Description

### Field of the invention

The present invention relates to systems and methods for correcting map data, in particular for identifying discrepancies in stored road geometries.

### Background of the invention

The adoption of electronic navigational aids has seen a large increase in recent years. Many road vehicles now integrate navigation and location services from the factory. Such services can offer accurate turn-by-turn navigation assistance, and increasingly specific guidance regarding lane changes and specific road layouts. The use of such navigational guidance systems has expanded beyond personal motor vehicles and such systems are now routinely used by users of many other modes of transport including commercial vehicles (such as large goods vehicles, commercial passenger transport vehicles). With the advances being made in the field of self-driving vehicles such navigation systems are a key technology in enabling autonomous point to point driving.

Additionally, with the large number of personal smart devices integrating navigational systems and location technology, users are increasingly reliant on such services for navigation when using other forms of personal transport, such as pedal cycles and even pedestrian travel.

In all of these cases accurate, detailed, digital mapping information is essential, in particular as the level of guidance offered by these systems becomes more granular. The availability of accurate road geometries and road layouts over large geographical areas is therefore desired. The consequences of an incorrect road geometry can lead to significant issues. For example, missing roads lead to individual journeys being sub-optimal and the most efficient route may not be used. On an aggregate level, as the incorrect road geometry will affect a large number of people in the same geographical area, this can lead to more widespread issues, such as unnecessary traffic or bottle necks. Similarly, incorrect road layouts can lead to confusion for vehicle users as they attempt to follow navigational guidance.

As roadways and roads are often changed and revised even initially accurate mapping data may become inaccurate in short periods of time. As such, extensive effort is expended by mapping companies in updating existing mapping data, and in particular road geometries. This can involve manual review of flagged errors in road geometries, with cartographers updating mapping data according to a number of sources of information. This can lead to delays in mapping data being updated as errors must first be reported. Equally, automated (or semi-automated) mapping vehicles are used which traverse the road network various times, but again this can lead to delays in the identification of errors.

### Summary of the invention

It is an object of the invention to provide systems and methods for identifying changes (or errors) in road geometries that address the issues set out above. In particular, it has been realized in the invention that location and/or movement data generated by the various navigational systems/services themselves may be used to automatically identify errors in the stored road geometry. To that end the invention provides a novel machine learning system for identifying changes in a stored road geometry in a given geographical area by combining the stored road geometry with historical movement data. An image segmentation approach is presented which enables such changes to be automatically identified.

According to a first aspect of the invention, there is provided a method identifying changes in road geometry, wherein the method comprises: obtaining an image (or pixel map, or bitmap or other raster image) of an initial (or estimated or stored) road geometry for a geographical area; obtaining an image (or pixel map, or bitmap or other raster image) of movement data for the geographical area; forming a composite image (or pixel map, or bitmap or other raster image) from at least the image of initial road geometry and the image of movement data; generating an image (or pixel map, or bitmap or other raster image) of road geometry corrections by applying a trained road geometry correction model to the composite image, wherein the image of road geometry corrections identifies one or more differences between the actual road geometry of the geographical area and the initial road geometry. The movement data may be thought of as vehicle movement data for the geographical area. The trained road geometry correction model typically is or comprises convolutional encoder-decoder neural network. The image of the initial road geometry may be an image mask in some embodiments.

It will be understood that the one or more differences may be or comprise any of: a road segment present in the actual road geometry and not present in the initial road geometry; a road segment present in the initial road geometry and not present in the actual road geometry; a road segment displaced in the actual road geometry relative to the initial road geometry.

The road geometry correction may be used further to update the initial road geometry. In this way in some embodiments the method may further comprise updating the initial road geometry according to the image of road geometry corrections to form an updated road geometry for the geographical area.

In some embodiments the composite image comprises at least one channel corresponding to the initial road geometry and at least one other channel corresponding to movement data.

In some embodiments the composite image is formed from the image of initial road geometry, the image of movement data, and a satellite image of the geographical area.

Said method may further comprise forming a further composite image from the image of initial road geometry and a satellite image of the area, wherein the trained road geometry correction model is applied to the composite image and the further composite image to generate the image of road geometry corrections. In this way the accuracy of the road geometry corrections may be enhanced by way of the additional information available from the satellite image. More specifically, the trained road geometry correction model may comprise: a first encoder arranged to receive as input a composite image comprising at least one channel corresponding to an initial road geometry and at least one other channel corresponding to movement data; a second encoder arranged to receive as input a further composite image comprising at least one channel corresponding to an initial road geometry and at least one other channel corresponding to a satellite image.

According to a second aspect of the invention there is provided a method of training a neural network for identifying road geometry corrections, for example such as a neural network embodying the road geometry correction model of the first aspect above. The method comprises: obtaining a set of known road geometries for a plurality of geographical areas; obtaining a set of images (or pixel maps, or bitmaps or other raster images) of movement data for the plurality of geographical areas; modifying the known road geometries to form a set of modified road geometries, forming a plurality of composite images (or pixel maps, or bitmaps or other raster images) from at least the set of modified road geometries and the set of images of movement data, each composite image formed from an image of a respective modified road geometry of a respective geographical area and the image of movement data for the respective geographical area; labelling each composite image based on the difference between the modified road geometry of the composite image and the corresponding known road geometry to form a set of labelled composite images; training a road geometry correction model according to the set of labelled composite images such that the trained road geometry correction model is configured to generate as output an image of road geometry corrections from an input composite image of an initial road geometry and movement data.

It will be understood that modifying a known road geometry may comprise any of:
adding a road segment to the known road geometry; deleting a road segment from the known road geometry; translating a road segment of the known road geometry.

In some embodiments each composite image is formed from an image of a respective modified road geometry of a respective geographical area, the image of movement data for the respective geographical area, and a satellite image of the respective geographical area. Alternatively, the method may comprise for each composite image forming a respective further composite image from the image of the respective modified road geometry of the respective geographical area and a satellite image of the respective geographical area. Here, the road geometry correction model may comprise: a first encoder arranged to receive as input a composite image comprising at least one channel corresponding to an initial road geometry and at least one other channel corresponding to movement data; a second encoder arranged to receive as input a further composite image comprising at least one channel corresponding to an initial road geometry and at least one other channel corresponding to a satellite image.

It will be understood that in embodiments of the first aspect or the second aspect the trained road geometry correction model may be an image segmentation model. In particular, the trained road geometry correction model may be any one of: Unet; Segformer 80; Unet++.

The movement data used in the embodiments described above may comprise a plurality of historical journeys in the geographical area. Here, each element (or pixel) of the image of movement data may indicate an amount (or number) of historical journeys that traversed the respective portion of the geographical area corresponding to said element. The image of vehicle movement data may be a heat map of historical journeys in the geographical area.

It will be appreciated that the methods described above may further comprise updating (retraining) the trained road geometry correction model based on a plurality of human generated road geometry corrections. The plurality of human generated road geometry corrections may further be prompted by a corresponding road geometry correction generated using the trained road geometry correction model.

According to a third aspect of the invention, there is provided a system adapted to carry out above-mentioned first aspect or any embodiment thereof.

To that end there is provided a system for identifying changes in road geometry, the system comprising a memory and one or more processors configured to carry out the steps of: obtaining an image (or pixel map, or bitmap or other raster image) of an initial (or estimated or stored) road geometry for a geographical area; obtaining an image (or pixel map, or bitmap or other raster image) of movement data for the geographical area; forming a composite image (or pixel map, or bitmap or other raster image) from at least the image of initial road geometry and the image of movement data; generating an image (or pixel map, or bitmap or other raster image) of road geometry corrections by applying a trained road geometry correction model to the composite image, wherein the image of road geometry corrections identifies one or more differences between the actual road geometry of the geographical area and the initial road geometry.

According to a fourth aspect of the invention, there is provided a system adapted to carry out above-mentioned second aspect or any embodiment thereof.

To that end there is provided a system for training a neural network for identifying road geometry corrections, the system comprising a memory and one or more processors configured to carry out the steps of: obtaining a set of known road geometries for a plurality of geographical areas; obtaining a set of images (or pixel maps, or bitmaps or other raster images) of movement data for the plurality of geographical areas; modifying the known road geometries to form a set of modified road geometries, forming a plurality of composite images (or pixel maps, or bitmaps or other raster images) from at least the set of modified road geometries and the set of images of movement data, each composite image formed from an image of a respective modified road geometry of a respective geographical area and the image of movement data for the respective geographical area; labelling each composite image based on the difference between the modified road geometry of the composite image and the corresponding known road geometry to form a set of labelled composite images; training a road geometry correction model according to the set of labelled composite images such that the trained road geometry correction model is configured to generate as output an image of road geometry corrections from an input composite image of an initial road geometry and movement data.

According to a fifth aspect of the invention, there is provided a computer program which, when executed by one or more processors, causes the one or more processors to carry out the above-mentioned first aspect or any embodiment thereof. The computer program may be stored on a computer readable medium.

According to a sixth aspect of the invention, there is provided a computer program which, when executed by one or more processors, causes the one or more processors to carry out the above-mentioned second aspect or any embodiment thereof. The computer program may be stored on a computer readable medium.

### Brief description of the drawings

Embodiments of the invention will now be described, by way of example only, with reference to the accompanying drawings, in which:
Figure 1a illustrates a geographical area or region;
Figure 1b schematically illustrates vehicle and associated navigational client;
Figure 1c shows a stored road geometry for a geographical area;
Figure 2 schematically illustrates a system for identifying changes or updates to a road geometry;
Figure 3 is a flowchart illustrating a method that may be performed by the system of figure 2;
Figure 4 schematically illustrates a training system for training a road geometry correction model, such as the road geometry correction model described in relation to figure 2;
Figure 5 is a flowchart illustrating a method that may be performed by the training system of figure 4;
Figure 6 schematically illustrates a variant system for identifying changes to a road geometry;
Figures 7a and 7b schematically illustrates variant systems for training a road geometry correction model, such as the variant road geometry correction models of the variant systems described in figure 6;
Figure 8 shows a number of examples of images that may be used in or generated by embodiments of the invention;
Figure 9 shows further examples images used and generated by embodiments of the invention;
Figure 10 schematically illustrates an example of a computer system;

### Detailed description of embodiments of the invention

In the description that follows and in the figures, certain embodiments of the invention are described. However, it will be appreciated that the invention is not limited to the embodiments that are described and that some embodiments may not include all of the features that are described below. It will be evident, however, that various modifications and changes may be made herein without departing from the broader spirit and scope of the invention as set forth in the appended claims.

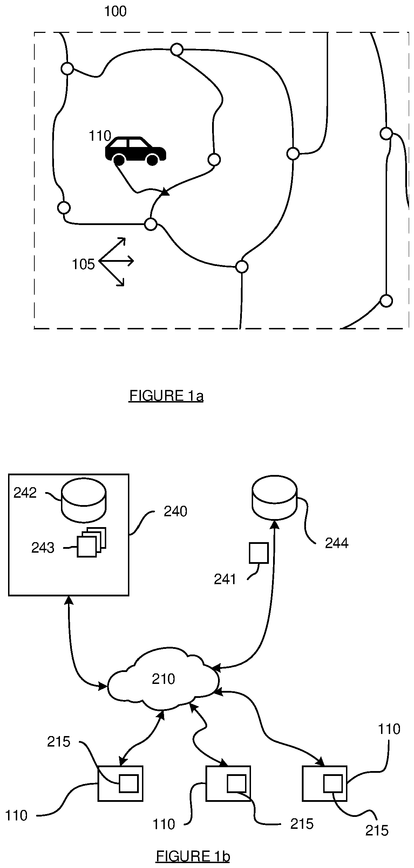

Figure 1a illustrates a geographical area (or region) 100. The geographical area 100 may be any size and may comprise (or represent) a part or all of: one or more continents and/or one or more countries and/or one or more states and/or one or more counties and/or one or more municipalities, etc. As shown in figure 1a, the geographical region 100 comprises a network (or a part thereof) 105 of navigable elements - the navigable elements are illustrated in figure 1a as respective solid lines connecting respective locations, illustrated as nodes/circles. As discussed above, a navigable element may be viewed as a part of a transport network 105 along which travel may be conducted by a mobile unit (where the mobile unit could be, for example, a vehicle, a person, etc.) - thus, for example, the navigable elements that form the network 105 may comprise: one or more roads, or parts thereof; and/or one or more routes, or parts thereof, taken by ferries or trains; and/or one or more paths, or parts thereof, for pedestrians; and/or one or more cycle paths, or parts thereof; etc.

For ease of discussion in the following description the navigable elements will be assumed to be road segments, along which road vehicles may travel. Here the network 105 will be a (or a portion of a) road network. However, it will be understood that the systems and methods described herein are not limited to road networks and may be applied to cycle path networks, footpath networks, shipping lanes, flight lanes and so on, or any combination thereof.

Figure 1a also illustrates an example mobile unit 110 - in this example a road vehicle. It will be understood that the vehicle 110 may be navigating (or travelling over) the road network 105 using a suitable navigational system. The navigational system may provide real-time (or turn-by-turn) navigational guidance to allow the vehicle 110 to follow a pre-defined route. Additionally, or alternatively the pre-defined route may have been generated using a route generation tool (such as may be present in the navigational system). In some cases the navigational system may display a visual representation of the road network 105 along with an indication of the vehicle's 110 location (or position) on the road network 105.

Figure 1b schematically illustrates the vehicle 110 and associated navigational client (or system) 215. The navigational client 215 is connected to a navigation data processing system 240 via a network 210. As illustrated there may be multiple vehicles 110 each with their own navigational client 215. Whilst figure 1b illustrates three such navigational clients 215, it will be appreciated that this is merely an example number of navigational clients 215 - the number, identity and location of the navigational clients 215 may change over time.

It will be appreciated that in order to enable the various functionality of a navigational system 215, map data 241 is stored, typically in one or more map databases 244. Additionally, or alternatively the map data may be stored locally on the navigational client 215. The navigational client 215 may access, or acquire, the map data from the one or more map databases 244. The map data 241 may be in one or more forms or formats, may be of one or more corresponding types, and may be suitable for one or more corresponding purposes. Map data 241 typically provides a model or representation of geospatial reality for the geographical area 100 (or a portion thereof) including the road network 105. In particular, the map data 241 incudes (or represents or encodes) a road geometry for the geographical area 100. The road geometry will be understood as the physical (or geographical) layout of the road segments of the road network 105 in the area 100. In this way the road geometry in the map data 241 specifies (or represents or otherwise indicates) the shape and location of each road segment. Typically, road geometry is stored (or represented) as a plurality of centre lines of the road segments. A centre line may be (or comprise or be represented as) a sequence of geospatial coordinates (or points) along the length of the corresponding road segment. Such road geometry may be visualized as a plan (or overhead) view of the roads, as shown in figure 1b discussed shortly below.

Map data 241 may also comprise one or more logical (or schematic) representations of the road network 105, such as in the form of one or more graphs. An example of map data is "SD" map data or "Standard Definition" map data. This map data represents stationary features (such as road infrastructure features for the road network 105) that are relevant for vehicle navigation systems. The SD map data may include a schematic representation of the road network 105 in the form of a graph representation, with the graph comprising arcs and nodes. The graph may be directed or undirected. The arcs are connected by nodes. The arcs and nodes of an SD map are associated with, or correspond to, road segments and connections of road segments, respectively. For the nodes, the SD map data comprises data for an associated point geometry, e.g. coordinates corresponding to the location of the node, or the connection, in the geographical region. Arcs have an associated road trajectory line, often referred to as a road centreline, representing the geometry of the road segment. In this way the SD map data stores the road geometry discussed above in the form of said road trajectory line which may be considered equivalent to the centre line of a road segment as discussed above. As such, the SD map data comprises data for the geometry of the arcs. The SD map data may store other data relating to node and/or arcs (e.g. speed limits applicable to road segments).

Other examples of map data would be known to the skilled person including:
- "ADAS" map data or "Advanced Driver Assistance System" map data. The ADAS map data may be viewed as a particular type of SD map data. The ADAS map data represents stationary features (such as road infrastructure features for the road network 105, for example road curvature and road gradient) that are relevant for ADAS functions (such as predictive cruise control).
- "HD" map data or "High Definition" map data. The HD map data may include a graph representation of the road network, with the graph comprising arcs and nodes. The graph may be directed or undirected. The arcs are connected by nodes. The arcs and nodes of the HD map are associated with, or correspond to, road areas and connections of road areas, respectively. For some arcs, referred to as road arcs, the associated road area is one or more lanes of a road segment. For some arcs, referred to as junction arcs, the associated area is a road junction. For the nodes, the HD map data comprises data for an associated point geometry, e.g. coordinates corresponding to the location of the node, or the connection, in the geographical region. Road arcs have an associated road trajectory line (or road centreline) representing the geometry of the road segment and may have one or more lane trajectory lines (or lane centrelines) representing the geometry of a respective lane of the road segment. The geometry of a junction area may be specified by one or more junction arcs. A junction area may also have one or more junction arcs corresponding to the geometry of a respective permitted manoeuvre at that junction - for example, for each entry lane into that junction, there may be a junction arc corresponding to a manoeuvre to each exit lane from that junction accessible from that entry lane. The HD map data comprises data for the geometry of the arcs. In this way it will be understood that the HD map data stored the road geometry discussed above in the form of these arc centrelines.

The navigational system of the vehicle 110 typically generates probe (or location) data. The probe data 243 generated by navigational system generally contains location information indicating a geographic location of the vehicle 110 (e.g. GNSS information comprising a latitude, a longitude and an altitude) and a time associated with that geographic location. The probe data 243 may contain additional information such as one or more of: an identifier of the navigational system; a speed of travel of the vehicle 115; an indication of a vehicle type; etc.

The nature of navigational clients and the probe data that they generate and provide is well-known and shall not, therefore, be described in more detail herein.

The navigational system may be arranged to determine which road segment along which the vehicle 110 is currently located/travelling, e.g. in order to display a location of the vehicle 110 along the road segment to a user. It will be understood that this may be done by comparing the location information in the probe data 243 with the known road geometry in the map data 241 for the relevant geographical area 100. For example, a navigational system may place (or identify or display) the vehicle 115 on the nearest point on the centreline of the nearest road segment. This may be done so as to enable the navigational system to provide appropriate turn-by-turn navigational guidance.

Navigational clients 215 are typically arranged to transmit, or provide, the probe data 243 to a navigation data processing system 240. The navigation data processing system 240 is responsible for obtaining, or acquiring, probe data 243 that has been generated, and provided, by the navigational clients 215. The navigation data processing system 240 may store the probe data 243 in the probe data database 242. Such stored probe data provides indications where a vehicle has been present at particular locations in the geographical area 100. As such, such stored probe data 243 may be thought of as an example of movement data for the geographical area 100.

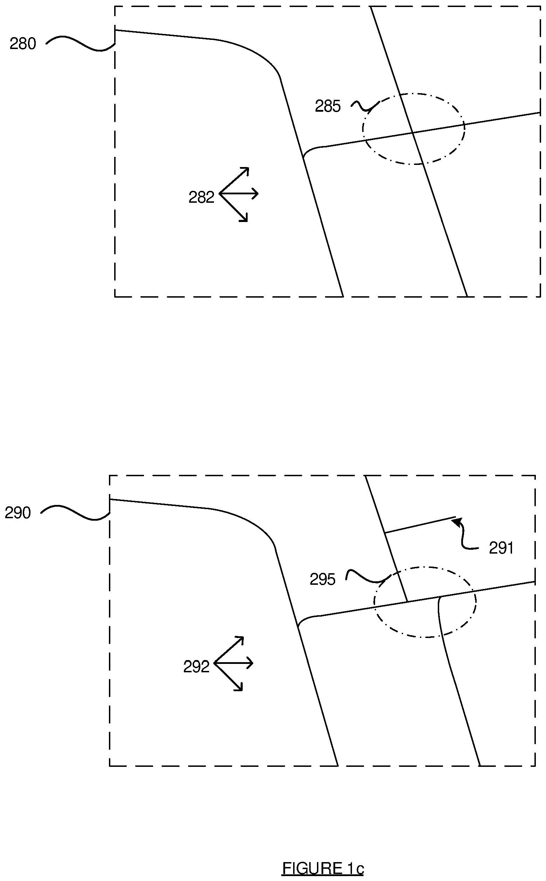

Figure 1c shows a stored road geometry 280 for a geographical area. The stored road geometry 280 comprises a plurality of road segments 282. The stored road geometry 280 is shown as a top down (or plan) view with solid lines indicating the centre line of the road segments. It will be understood that the stored road geometry 280 may have been generated automatically (or semi-automatically) based on various data (or information) gathered regarding the road network in the geographical area. Such data may include aerial images, satellite images, images generated from mapping vehicles that traverse the road network, existing road maps (such as from geographic surveys and highways authorities) etc. The stored road geometry 280 may have been generated and/or refined by cartographers based on said data.

Also illustrated in figure 1c is the current (or actual) road geometry 290 for the geographical area 100. The current road geometry 290 comprises a plurality of road segments 292. The current road geometry 290 is shown as a top down (or plan) view with solid lines indicating the centre line of the road segments 292.

As can be seen in figure 1c there are a number of discrepancies between the stored road geometry 280 and the actual road geometry 290. In the examples shown in figure 1c a road segment 291 present in the actual road geometry 290 is missing in the stored road geometry 280. Also, a number of road segments 282 in the stored road geometry 280 are shown as forming a four-way junction 285, whereas in the actual road geometry 290 these road segments form a staggered junction 295. It will be appreciated that discrepancies (or differences) between a stored (or initial) road geometry and an actual road geometry may include any of:
- a road segment present in the actual road geometry and not present in the stored road geometry;
- a road segment present in the stored road geometry and not present in the actual road geometry;
- a road segment displaced in the actual road geometry relative to the stored road geometry; and so on.
Such discrepancies may be due to an error in generating the stored road geometry. For example, the layout of a junction may be misidentified by the cartographer. Equally, such discrepancies may be due to a change in the actual road geometry subsequent to the stored geometry being generated. For example, a four-way crossing may be changed to a staggered junction for safety or traffic flow concerns. A new road (such as a bypass) may be laid, and/or existing road segments may be diverted.

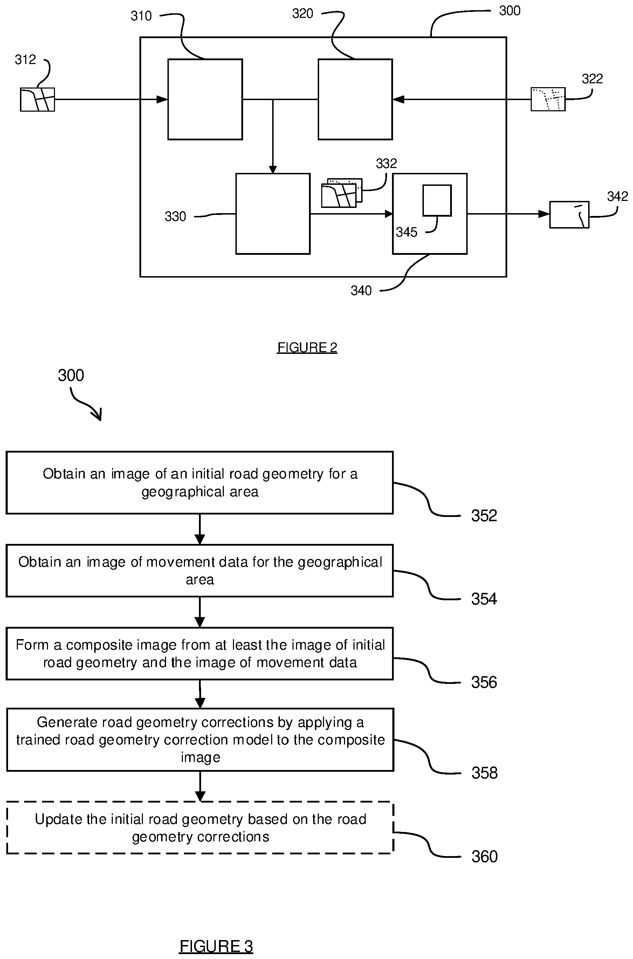

Figure 2 schematically illustrates a system 300 for identifying changes (or updates) to a road geometry. The system 300 comprises a road geometry module 310, a movement data module 320, a compositing module 330, and a road geometry analysis module 340.

The road geometry module 310 is arranged to obtain an image 312 (such as a raster image) of an initial road geometry 280 for a geographical area 100. As discussed above the initial road geometry may be thought of as a representation of geospatial reality of the road network in the geographical area 100. In particular, the road geometry represents the physical layout of the road segments in the geographical area 100. However, as discussed above the initial road geometry may comprise one or more discrepancies compared to (or with respect to) the actual road geometry of the geographical area 100.

In the context of the disclosure, the image 312 of the initial road geometry 280 is generally provided to the road geometry module in the form of a pixel map (or bitmap). In other words, the image 312 of the initial road geometry 280 is typically a raster image. The image of the initial road geometry 280 corresponds to the geographical area 100 such that positions in the geographical area correspond to (or map to) positions in the image 312.the image 312 here generally corresponds to a top-down (or plan) representation of the road network and hence the geographical area 100. It will be understood that the image 312 need not be a photo realistic image of the geographical area, nor does the image need to be displayed, or displayable. The image 312 will generally represent the road segments as lines (such as shown in figure 1c discussed previously). Each line typically follows the path of the road segment. For example, the line may follow the centre line of the road segment. In way it will be understood that the image 312 may comprise solely of lines representing road segments.

As such, the image may be a single channel image. In other words, the image may comprise single values for each pixel. In some cases, the image may be a binary image - i.e. where each pixel is represented (or stored) as a single bit. The image may comprise (or be in the form of) an array of values, each value indicating whether a road segment is present at a corresponding position in the geographical area.

The road geometry module 310 may be arranged to obtain the image 312 of the initial road geometry from a data store (such as one or more map databases 244). Alternatively, the road geometry module may be arranged to generate the image 312 of the initial road geometry from map data, such as any of the map data described above. The road geometry module 310 may be arranged to obtain such map data from a data store (such as one or more map databases 244). Generation of images of road geometries from map data is a process that would be well known to the skilled person and hence will not be discussed further herein.

The movement data module 320 is arranged to obtain an image 322 (such as a raster image) of movement data for the geographical area. The movement data may comprise a plurality of historical journeys in the geographical area. The movement data may, additionally, or alternatively, comprise probe data as described above. As such, the movement data may be thought of as providing indications of geographical positions, during their respective journeys in the geographical area, of vehicles that have previously travelled in the geographical area. The movement data may be aggregate data. In particular, the movement data may indicate the number (or relative number) of vehicles that have traversed a particular geographical position.

The image 322 of the movement data in typically in the form of a pixel map (or bitmap). In other words, the image 322 of the movement data is typically a raster image. The image 322 of the movement data corresponds to the geographical area 100 such that positions in the geographical area correspond to (or map to) positions in the image 322 of the movement data. In order to aid the compositing operation described shortly below, the correspondence (or mapping) between the positions in the geographical area and the positions in the image 322 of the movement data is usually the same as the correspondence (or mapping) between the positions in the geographical area and the positions in the image 312 of the road geometry. In other words, a given pixel position in the image 312 of the road geometry and the image 322 of the movement data corresponds to the same position in the geographical area 100.

Therefore, the image 322 of the movement data is usually a top-down (or plan) representation of the geographical area 100. It will be understood that the image 322 of the movement data need not be a photo realistic image of the geographical area, nor does the image need to be displayed, or displayable. The image 322 of the movement data indicates vehicles movement over the geographical area. In particular the image 322 of the movement data indicates a historical amount (or flux or number or presence) of vehicles traversing particular positions of the geographical area. Typically, each element (or pixel) of the image 322 of the movement data indicates an amount of historical journeys (or vehicles) that traversed the respective portion of the geographical area corresponding to said element. Here the value of each pixel indicates the amount of vehicles. For example, for a single channel image the single value of each pixel may provide a vehicle density (or amount). An example of such an image would be a greyscale image. Equally it will be appreciated that the image 322 of the movement data may comprise a number of channels. For example, the image 322 of the movement data may be a three-channel image (such as an RGB image). As such, the image 322 of the movement data may be in the form of a heatmap with the colour spectrum representing the range of vehicle amounts. In a specific example the image 322 of the movement data may be a three-channel image with each channel being a single value. In some cases the value for each channel may be encoded as a single bit. Here, the value of 1 in the first channel may indicate a "high" relative amount of vehicles traversing that position. A value of 1 in the second channel may indicate a "medium" relative amount of vehicles traversing that position. A value of 1 in the third channel may indicate a "low" relative amount of vehicles traversing that position. A zero value pixel (where all channels are 0 or alternatively where all channels are 1) may indicate no vehicles (or below a threshold number of vehicles) have traversed that position.

Of course, it will be appreciated that more than a single bit may be used for each channel. Typically, in an RGB image each channel is represented as an 8 bit value (ranging between 0 and 255). In such an example, higher values indicate high intensity and lower values indicates low intensity for each corresponding RGB channel. A path through the available colour spectrum for such an image may be mapped to vehicle intensity. Construction of such heatmaps is well-known and will not be described further herein.

It will therefore be understood that the image may comprise single values for each pixel (such as in the greyscale image or single channel image referred to above). The image may therefore comprise (or be in the form of) an array of values. Alternatively, the image may comprise multiple values (or channels) for each pixel. The image may therefore comprise (or be in the form of) an array of vectors. The components of each vector being the channels of the image.

The movement data module 320 may be arranged to obtain the image 322 of the movement data from a data store (such as the probe data database 242). Alternatively, the movement data module 320 may be arranged to generate the image 322 of the movement data from movement data. The road geometry module 310 may be arranged to obtain such movement data from a data store (such as the probe data database 242). Generation of heatmaps of movement data and the like from journey and/or probe data is a process that would be well known to the skilled person and hence will not be discussed further herein, see for example European Patent 2679956 - Method and Apparatus for Detecting Deviations from Map Data)

The compositing module 330 is arranged to form a composite image 332 from the image 312 of the initial road geometry and the image 322 of the movement data. As described above typically, the image 312 of the initial road geometry and the image 322 of the movement data have a common mapping (or correspondence) to the positions of the geographical area. In such cases the from the image 312 of the initial road geometry and the image 322 of the movement data may be composited directly to from the composite image. The composite image may therefore comprise the channel (or channels) of the image 312 of the initial road geometry and the chancel (or channels) of the image 322 of the movement data. In other words, each pixel of the composite image comprises the channels of the same pixel of the image 312 of the initial road geometry and the channels of the same pixel of the image 322 of the movement data. For example, when the image 312 of the initial road geometry is a single channel image and the image 322 of the movement data is a three channel image the resulting composite image is a four channel image.

Alternatively, one of the image 312 of the initial road geometry and the image 322 of the movement data may be overlaid over the other image using standard image processing techniques, to form the composite image. Examples of suitable image processing techniques include any of: alpha blending, multiply blending, screen blending, overlay blending, and so on.

Where the image 312 of the initial road geometry and the image 322 of the movement data do not have a common mapping (or correspondence) to the positions of the geographical area 100, the compositing module 330 is arranged to transform one or both of the images, such that the resulting images have a common mapping (or correspondence) to the positions of the geographical area 100. This allows the compositing module 330 to form the composite image using the resulting images, in the manner described above.

As such it will be understood that each element (or pixel) of the composite image is based on the corresponding pixels of the image 312 of the initial road geometry and the image 322 of the movement data. Also, each element (or pixel) of the composite image 332 corresponds (or maps) to a respective position in the geographical area 100. As described above in relation to the image 322 of the movement data, the composite image 332 may comprise (or be in the form of) an array of vectors. The components of each vector being the channels of the composite image, these channels comprising the channels of the image 312 of the initial road geometry and the image 322 of the movement data.

The road geometry analysis module 340 is arranged to generate road geometry corrections (or potential, or candidate road geometry corrections) by applying a trained road geometry correction model 345 to the composite image 332. The trained road geometry correction model 345 is arranged to receive as input the composite image 332 and produce (or generate) as output indications of errors in the initial road geometry. For instance, the output 342 of the trained road geometry correction model 345 may indicate, for each element (or pixel) of the composite image whether the presence of a road in the initial geometry at the position corresponding to said element is correct.

The output of the trained road geometry correction model 345 usually takes the form of an output image 342 corresponding to the composite image 332. The value at each pixel of the output image indicates whether the presence of a road in the initial geometry at the position corresponding to the pixel is correct. As such, the trained road geometry correction model 345 may be thought of as performing an image segmentation function (or analysis). In this way it will be appreciated that the output image may take the form of a labelled image or mask.

The trained road geometry correction model 345 may be or comprise a convolutional encoder-decoder neural network. As described shortly below numerous convolutional encoder-decoder neural network based image segmentation architectures may be used for the trained road geometry correction model 345. As such, the trained road geometry correction model 345 may be or comprise any of: a Unet network; a Segformer 80 network; a Unet++ network; and so on. It will be appreciated that numerous semantic segmentation deep neural network architectures would be known to the skilled person and may be employed here.

The trained geometry correction model 345 may, in effect, be thought of as identifying discrepancies (or errors) in the initial road geometry, based on the information available in the movement data. For example, where movement data shows a high volume of vehicles moving alongside a road indicated in the initial road geometry it may be deduced that the position of the road is erroneous in the initial road geometry and should be shifted so that it is coincident with the volume of traffic. Similarly, where there is a large volume of traffic in an area where no road is indicated in the initial road geometry it may be deduced that a road is missing from the initial road geometry. As part of the training process (described shortly below) relevant patterns in composite images, indicating such scenarios are effectively identified and encoded as part of the trained network such that the trained network may identify misaligned or missing roads or other errors when presented with new (or unseen) composite images.

Typically, the output image 342 comprises one or more labelled road segments. The road segments may be labelled according to the values of the pixels that make up the road segments. As such, the output image may comprise one or more colour-coded road segments. The labels of the road segments may indicate any of: a road segment present in the actual road geometry and not present in the initial road geometry; a road segment present in the initial road geometry and not present in the actual road geometry; a road segment displaced in the actual road geometry relative to the initial road geometry; a road segment present in the actual road geometry and present in the initial road geometry; and so on.

It will be appreciated that the output image 342 represents (or encodes or otherwise comprises) corrections to the initial road geometry. The output image 342 may therefore be used by subsequent systems (or modules) to correct (or update) the initial road geometry. In particular, subsequent systems (or modules) may add, delete and/or move, road segments in the initial geometry as indicated by the output image 342. Additionally, or alternatively the output image 342 may be provided to a user to manually update the road geometry in accordance with the corrections in the output image 342. The updated road geometry may be stored in the one or more map databases 244 for future use.

By providing corrections to an existing geometry using the initial (or existing estimate of) the road geometry as one of the inputs it will be appreciated that a more accurate set of corrections may be obtained, as compared to approaches where, for example, a new geometry is obtained directly from movement data, which is then compared to the existing estimate of the road geometry. In particular, the approach of the current invention allows information from the existing estimate of the road geometry to be leveraged in identifying if the existing estimate is in error. For example, it may be that certain errors in estimated road geometries are systematic, due for example to the way that the existing estimate was generated. Patterns in such errors may be identified as part of training the road geometry correction model so that further examples of such errors may be identified by the trained road geometry correction model even where the corresponding movement data may be ambiguous or inconclusive on its own.

Figure 3 is a flowchart illustrating a method 350 that may be performed by the system 300 of figure 2.

At a step 352 an image 312 of an initial road geometry 280 for a geographical area 100 is obtained. As discussed above the image 312 is typically a raster image, and represents the geospatial reality of the road network in the geographical area 100. Step 352 may comprise generating the raster image from map data in a certain area stored in a different manner, for instance as a vector graphics image.

At a step 354 an image 322 of movement data for the geographical area 100 is obtained. As discussed previously the movement data typically comprises (or represents) data indicating vehicle movement over the geographical area (such as probe data). Typically, each element (or pixel) of the image 322 of the movement data indicates an amount of historical journeys (or vehicles) that traversed the respective portion of the geographical area corresponding to said element.

At a step 356 a composite image 332 is formed from at least the image 312 of the initial road geometry and the image 322 of the movement data. Typically, the composite image 332 is formed by overlaying (or merging) the image 312 of the initial road geometry and the image 322 of the movement data. It will be appreciated that each element (or pixel) of the composite image is based on the corresponding pixels of the image 312 of the initial road geometry and the image 322 of the movement data.

At a step 358 road geometry corrections are generated by applying a trained road geometry correction model 345 to the composite image 332. The trained road geometry correction model 345 is arranged to receive as input the composite image 332 and produce (or generate) as output indications of errors in the initial road geometry. Typically, the output of the trained road geometry correction model 345 indicates, for each element (or pixel) of the composite image whether the presence of a road in the initial geometry at the position corresponding to said element is correct. As such, the road geometry corrections are usually in the form of an image.

At an optional step 360 (which may, or may not be carried out by the system 300) the initial road geometry is updated based on the road geometry corrections to form an updated road geometry. In other words, the road geometry corrections may be applied to the initial road geometry. It will be appreciated that the step 360 may in some cases be entirely computer implemented. Alternatively, the step 360 may be carried out (at least in part) by a human, such as a cartographer. In particular, a manual review f the road geometry corrections may be carried out. The review may take account of other information to determine (or verify) whether the road geometry corrections are correct. The road geometry corrections may then be applied in response to (on the condition that) the road geometry corrections are verified to be correct. As will be described shortly below, such verified road geometry corrections (and the corresponding initial road geometries) may be stored for further training of the trained road geometry correction model 345.

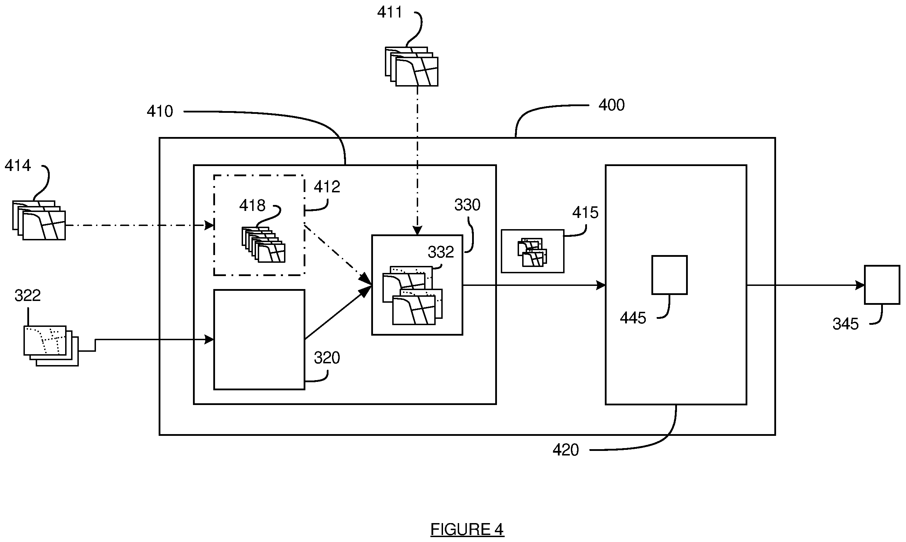

Figure 4 schematically illustrates a training system 400 for training a road geometry correction model, such as the road geometry correction model described in relation to figure 2. The system 400 comprises a training data module 410, and a training module 420.

The training module 420 is arranged to train a road geometry correction model 445 according to a training data set. Training of the road geometry correction model 445 is such that the trained road geometry correction model 345 is configured to generate as output road geometry corrections from an input composite image 332 of an initial road geometry and movement data, as described above in relation to figure 2. As will be understood the road geometry correction model comprises a plurality of trainable (or adjustable) parameters which during training are optimized. The specific training process is dependent on the architecture of the road geometry correction model 445, but as set out above architectures such as Unet; Segformer 80; Unet++; and so on may be used. Typically, for such architectures an adaptive optimizer, such as Adam, AdamW, Adagrad, and so on may be used. However, non-adaptive methods such as Gradient descent, Stochastic gradient descent and so on may be used. Such training processes are well-known to the skilled person and not described further herein.

The training data set 415 comprises a plurality of composite images 332 as described above. The training data set 415 further comprises, for each composite image 332, a respective label. The label indicates the errors (or discrepancies) in the road geometry of the corresponding composite image 332. In particular, the label takes the form of the required output of the trained road geometry correction model 345. As such, the label usually takes the form of an output image, as described above in relation to figure 2.

The training data module 410 is arranged to generate (or compile) the training data set 415. The training data module 410 may be arranged to receive (or obtain) a set of initial road geometries 411 for a plurality of geographical areas 100 and corresponding labels for each of the initial road geometries. Such initial road geometries 411 being road geometries that have previously had to be corrected. In this case the labels indicate the known corrections that were made to the road geometries. It will be appreciated that the initial road geometries 411 and their labels may therefore by human generated, based on previous human generated corrections. Such data, the initial road geometries 411 and their labels, may be termed "real" or "real-world" training data.

Additionally, or alternatively the training data module 410 may be arranged to receive (or obtain) a plurality of known road geometries 414 for a plurality of geographical areas 100. As shown in figure 4 the training data module 410 comprises the optional geometry modification module 412. The geometry modification module 412 is arranged to modify a known road geometry 414 to form a modified road geometry 418. The geometry modification model 412 may be arranged to modify a known road geometry 414 by any of: adding a road segment to the known road geometry; deleting a road segment from the known road geometry; translating a road segment of the known road geometry. Usually, the geometry modification model 412 is arranged to apply the modification (or modifications) to a graph representation of the road geometry. This allows the geometry modification module 412 to modify the road geometry by adding, or deleting, or translation (or shifting) one or more edges of the graph. As discussed above the road geometry may already be in the form of a graph. Alternatively, the geometry modification module 412 may be arranged to convert an image of the road geometry 414 into a graph representation of the road geometry prior to modification. The geometry modification module 412 may be arranged to convert the graph representation of the modified road geometry 418 into an image.

The geometry modification module 412 may be arranged to generate a corresponding label for the modified road geometry 418, indicating the discrepancy (or error) introduced in the modified road geometry compared to the known road geometry. it will be understood that such a label may be generated based on the modification. Equally such a label may be generated based on a comparison of the modified road geometry and the known road geometry.

As such, the geometry modification module 412 may be arranged to generate a set of modified road geometries 418 from the plurality of known road geometries 414. It will be appreciated that a single known road geometry 414 may give rise to multiple different modified road geometries 418 in the set of modified geometries 418. The set of modified road geometries 418 may also be a labelled set of modified road geometries. Such data, the modified road geometries and their labels, may be termed "synthetic" training data.

For ease of discussion in the description below the term "set of road geometries" will be used to encompass both modified road geometries 418 (i.e. synthetic data) and initial road geometries 411 (i.e. real-world data) it will be appreciated that the "set of road geometries" may include exclusively real-world data, or exclusively synthetic data, or a mixture of the two.

The training data module 410 comprises a movement data module 320. The discussion above of the movement data module 320 shown in figure 2 applies equally to the movement data module 320 shown in figure 4. In particular, the movement data module 320 is arranged to obtain a respective image of movement data 322 for each of the geographical areas represented in the set of road geometries. These images of movement data may be referred to as a set of images of movement data 322. The discussion of the image 322 of the movement data set out in relation to figure 2 above applies equally to the images of movement data in the set of images of movement data here.

The training data module 410 comprises a compositing module 330. The discussion above of the compositing module 330 shown in figure 2 applies equally to the compositing module 330 shown in figure 4. In particular, the compositing module 330 is arranged to form a plurality of composite images 332 from at least the set of road geometries and the set of images of movement data 322. As such, each composite image 332 is formed by the compositing module 330 from an image of a modified road geometry of a given geographical area and the image of movement data for the given geographical area. The discussion of the composite image 332 set out in relation to figure 2 above applies equally to the composite images here.

The training data module 410 is arranged to label the plurality of composite images 332. In particular, the training data module 410 is arranged to apply (or associate or otherwise link) each composite image 332 with the label of the respective road geometry. In other words the label of the road geometry that formed the composite image 332 is associated with the composite image. Each label is typically in the form of an output image as described above in relation to figure 2. It will be understood that the training data module 410 may be arranged to generate the label and carry out the association in a single step (or action). The plurality of labelled composite images forms the training data set 415 (or at least part thereof).

In this way it will be understood that the training data module 410 is arranged to generate a training data set 415 that comprises a plurality of composite images 332 of erroneous road geometries and movement data, along with associated labels typically in the form of images indicating errors (or discrepancies) in the road geometries depicted in the composite image. In other words, the training data set 415 comprises expected inputs to the trained road geometry correction model 345 (e.g. the composite images) and the expected (or desired) outputs (e.g. the output images described in relation to figure 2). Thus, the training module 420 may be arranged to use standard supervised learning techniques to train the road geometry correction model 445 using the training data set generated by the training data module 410.

It will be appreciated that the known road geometries in the discussion above may not be completely accurate and may themselves contain unknown or unidentified errors. Nevertheless, their use would still be beneficial to the training due to the subsequent inclusion of known errors into these geometries, and the labelling of these in the training data set. Furthermore, the use of such "synthetic" training data enables the initial training of a road geometry correction model 345 where there may not be a sufficient quantity of real training data available. It will be appreciated that during use of the trained road geometry correction model 345 further real training data may be acquired. In particular, where the errors identified by the trained road geometry correction model 345 are subject to human review and further investigation subsequently identified (or verified) errors in the road geometry may be used as additional real training data. the trained road geometry correction model 345 may then be re-trained (or refined, or updated) using the further collected real training data, thus improving the accuracy of the trained road geometry correction model 345.

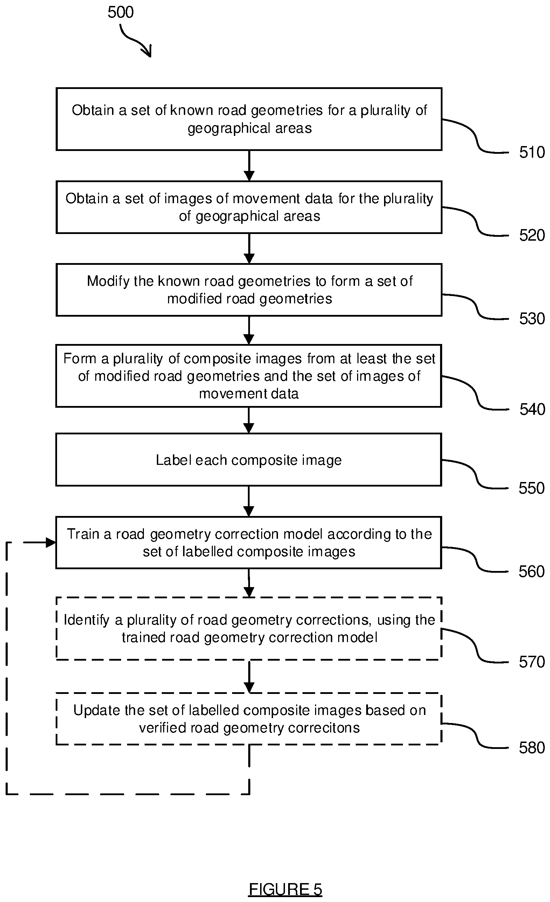

Figure 5 is a flowchart illustrating a method 500 that may be performed by the training system 400 of figure 4.

At a step 510 a set of known road geometries for a plurality of geographical areas are obtained. The step 510 may comprise a plurality of iterations of the step 352 described above.

At a step 520 a set of images of movement data for the plurality of geographical areas are obtained. The step 520 may comprise a plurality of iterations of the step 354 described above. In particular, the step 520 comprises obtaining a respective image of movement data for each of the geographical areas represented in the set of road geometries

At a step 530 the known road geometries are modified to form a set of modified road geometries. In particular, the step 530 may comprise modifying each known road geometry by any one or more of: adding a road segment to the known road geometry; deleting a road segment from the known road geometry; translating a road segment of the known road geometry. It will be appreciated that a single known road geometry may give rise to multiple different modified road geometries in the set of modified geometries.

At a step 540 a plurality of composite images are formed from at least the set of modified road geometries and the set of images of movement data. The step 540 may comprise carrying out the step 356 for each modified road geometry and corresponding image of movement data.

At a step 550 a set of labelled composite images is formed. The step 550 comprises, for each composite image, labelling said composite image based on the difference between the modified road geometry of the composite image and the corresponding known road geometry to form a respective labelled composite image. The step 550 comprises applying typically comprises (or associating or otherwise linking) each composite image with the label of the respective modified road geometry.

At a step 560 a road geometry correction model is trained according to the set of labelled composite images. As such the labelled composite images may be thought of as a training data set as discussed above. The training of the step 560 is such that the trained road geometry correction model is configured to generate as output an image of road geometry corrections from an input composite image of an initial road geometry and movement data.

As such the resulting trained road geometry correction model may be used to identify changes in an initial road geometry, for example as part of the system 300 or the method 350 described above.

It will also be appreciated that the training method 500 may take the form of an ongoing or continual training method. In this way there may be an optional step 570 comprises identifying a plurality of road geometry corrections, using the trained road geometry correction model, for a plurality of initial road geometries. Such identification may be carried out for example according to the method 350 described above. As set out in the optional step 360 the identified road geometry corrections may be subject to further human verification. In this way a set of verified road geometry corrections may be generated. Such a verified road geometry correction would be a road geometry correction generated by the trained road geometry correction model and manually verified as correct. Manual verification may also include manual modification of a road geometry correction to include further (or updated) corrections.

At an optional step 580 each initial road geometry may be labelled with the corresponding verified road geometry correction and added to (or included in) the training data set. In this way the step 580 may comprise updating the set of labelled composite images based on verified road geometry corrections. The method 500 may then return to the step 560 where the road geometry correction model is re-trained according to the updated set of labelled composite images (i.e. the updated training data set). It will also be appreciated that as part of the step 570 additional labelled road geometries (such as the real-world data described above) may also be included in the updated training data set.

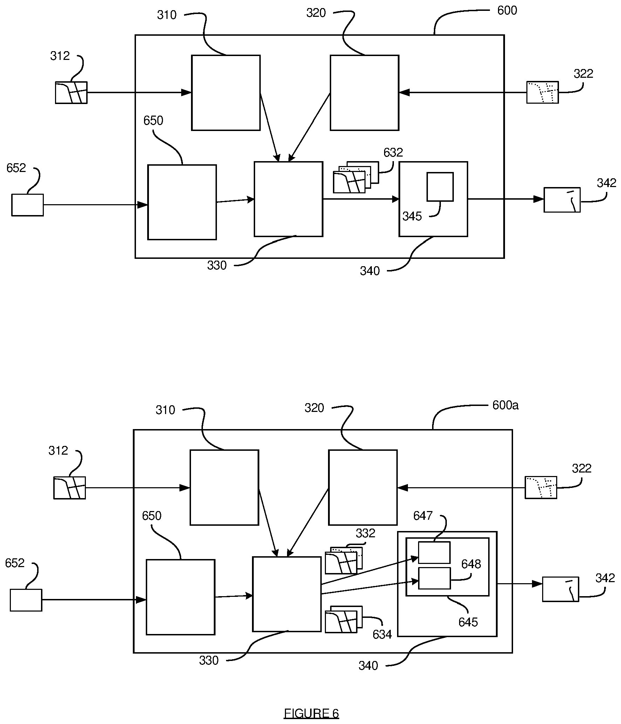

Figure 6 schematically illustrates a system 600 for identifying changes (or updates) to a road geometry. The system 600 is a variant of the system 300 described above in relation to figure 2. The system 600 comprises a road geometry module 310, a movement data module 320, a compositing module 330, and a road geometry analysis module 340. The description set out above in relation to figure 2 applies equally to the system 600 and its components except where noted below.

The variant system 600 further comprises a photographic image module 650. The photographic image module is arranged to obtain a photographic image 652 of the geographical area 100. The photographic image 652 will typically be an overhead (or aerial) view of the geographical area 100. It will be appreciated that whilst the photographic image 652 will usually be generated using visible light photography, other sorts of photography, such as infra red photography, or thermal photography may be used. The photographic image 652 may be any of: an aerial photograph; a satellite photograph (or image); and an elevated (or high-level or mast) photograph. It will be appreciated that the photographic image 652 may comprise multiple images that have been stitched together to form a single image. Various other types of (pre-)processing may have been applied to the image before it is obtained and/or may be applied to it once it is obtained. The photographic image 652 is a raster image. As such, the photographic image 652 typically comprises one or more channels as discussed previously in relation to the other images.

The photographic image module 650 is usually arranged to obtain the photographic image 652 of the geographical area 100 from a suitable image store. It will be appreciated that there may be multiple photographic images 652 of the geographical area 100 available to the photographic image module 650. As such, the photographic image module 650 may be arranged to select the photographic image 652 based on one or more criteria. The one or more criteria may comprise: a time that the photographic image was acquired (or taken); the resolution of the photographic image; a time of day that the photographic image was acquired (or taken); a measure of image quality for the photographic image 652 (such as a measure of focus, a measure of exposure, and so on).

A criterion that may be particularly important is the level of occlusion in the photographic image 652. It will be appreciated that for some photographic images (such as high-altitude aerial images or satellite images) atmospheric phenomena (such as clouds) may obscure some or all of the geographical are in the image. As such, the photographic image module 650 may be arranged to discard (or not select) a photographic image 652 that has above a threshold level of occlusion.

It will be appreciated that the photographic images available to the photographic image module 650 may include (or capture) an area larger than the geographical 100. As such the photographic image module 650 may be arranged to crop a photographic image to the geographical area 100 when obtaining the photographic image 652.

As with the system 300 described above, the compositing module 330 is arranged to form a composite image 332 from the image 312 of the initial road geometry and the image 322 of the movement data. However, in the variant system 600 the composite image is also formed from the photographic image 652. As such, in the variant system 600 the compositing module 330 is arranged to form a composite image 332 from the image 312 of the initial road geometry, the image 322 of the movement data, and the photographic image 652.

As described above in relation to the image of the movement data typically, the image 312 of the initial road geometry and the photographic image 652 have a common mapping (or correspondence) to the positions of the geographical area. In such cases the from the image 312 of the initial road geometry, the image 322 of the movement data, and the photographic image 652 may be composited directly to from the composite image.

Where the image 312 of the initial road geometry and the photographic image 652 do not have a common mapping (or correspondence) to the positions of the geographical area 100, the compositing module 330 is arranged to transform one or both of the images, such that the resulting images have a common mapping (or correspondence) to the positions of the geographical area 100. This allows the compositing module 330 to form the composite image 632 using the resulting images.

The composite image 632 may therefore comprise the channel (or channels) of the image 312 of the initial road geometry, the channel (or channels) of the image 322 of the movement data, and the channel (or channels) of the photographic image 652. In other words, each pixel of the composite image comprises the channels of the same pixel of the image 312 of the initial road geometry, the channels of the same pixel of the image 322 of the movement data, and the channels of the same pixel of the photographic image 652.

Alternatively, the image 312 of the initial road geometry, the image 322 of the movement data, and photographic image 652 may be overlaid over each other using standard image processing techniques, to form the composite image 632. Examples of suitable image processing techniques include any of: alpha blending, multiply blending, screen blending, overlay blending, and so on.

As with the system 300, the road geometry analysis module 340 is arranged to generate road geometry corrections by applying the trained road geometry correction model 345 to the composite image 332. The trained road geometry correction model 345 is arranged to receive as input the composite image 332 and produce (or generate) as output indications of errors in the initial road geometry. In this variant however the composite image is also formed form the photographic image 652, and the road geometry correction model 345 is trained accordingly as described shortly below.

As such, the trained geometry correction model 345 may, in effect, in this variant be thought of as identifying discrepancies (or errors) in the initial road geometry, based on the information available in the movement data and in the photographic image. For example, where the photographic image shows a road like structure where no road is present in the road geometry the trained geometry correction model 345 may identify this as a missing road. As part of the training process (described shortly below) relevant patterns in composite images, indicating such scenarios are effectively identified and encoded as part of the trained network such that the trained network may identify misaligned or missing roads or other errors when presented with new (or unseen) composite images.

It will be understood that by including satellite image data in the input to the road geometry correction model the correction power of the model may be improved in areas where there is minimal movement data, such as rarely used roads or low population areas. Equally, satellite image data may aid in correction identification for certain classes of correction, such as roads to be deleted. In particular, where roads are to be deleted movement data would provide an indication due to a lack of movement data in the location of the road, however this could also just be indicative of a rarely used (but still present) road. As such, a satellite image showing the presence (or absence) of such a road provides further certainty regarding whether a correction is needed.

In a further variant system 600a also shown in figure 6 instead of being arranged to generate a single composite image 632, the compositing module 330 is arranged to form a first composite image 332 from the image 312 of the initial road geometry and the image 322 of the movement data (such as in the manner described above in relation to figure 3). The compositing module 330 is also arranged to form a second composite image 634 from the image 312 of the initial road geometry and the photographic image 652. The second composite image 632 may be formed in the same manner as the first composite image, but with the photographic image 652 used in place of the image 322 of the movement data.

In this further variant the road geometry analysis module 340 is arranged to provide both the first and second composite images to variant trained road geometry correction model 645 as separate but concurrent inputs. In other words the variant trained road geometry correction model 645 in this further variant is arranged to receive two inputs, a first composite image and a second composite image. As described previously, the trained road geometry correction model 345 usually is (or comprises) a convolutional encoder-decoder neural network. As such, the input to the trained road geometry correction model 345 is usually received (or processed) by an encoder (or a plurality of encoder layers). In this variant trained road geometry correction model 645 there are two encoders 647; 648. The first encoder 647 is arranged to receive a composite image formed of an image of an initial road geometry of the geographical area and an image of movement data of the geographical area (e.g. the first composite image 332). The second encoder 648 is arranged to receive a composite image formed of an image of an initial road geometry of the geographical area and a photographic image of the geographical area (e.g. the second composite image 634). As such, in this further variant the variant trained road geometry correction model 645 may be (or comprise or be implemented as) a multi-branch N-encoder 1-decoder convolutional neural network. In this example N is 2, but it will be appreciated that the above further variant may in some cases generated further composite images of the image of the road geometry overlayed with (or on) further photographic images of the geographical area. For example this may be useful if there are multiple sources of photographic images (such as multiple source s of satellite images). In such cases, variant the trained road geometry correction model 645 would, accordingly comprise a respective further encoder for each further composite image. It will be appreciated that save for these differences the discussion of the trained road geometry correction model 345 outlined above applies equally to the variant trained road geometry correction model 645.

In such multi-branch N-encoder 1-decoder convolutional neural network the outputs of the encoders are typically convolved according to a predetermined algorithm before being operated on by the decoder layers. An example of such a multi-branch N-encoder 1-decoder convolutional neural network is ME-Net, described in "ME-Net: Multi-Encoder Net Framework for Brain Tumor Segmentation", Zhang et al. arXiv:2203.11213, https://doi.org/10.48550/arXiv.2203.11213.

It will be appreciated that by using such a multi-encoder type architecture one or more satellite images (or other input data) may be provided to the road geometry correction module, whilst more easily allowing for situations where one (or more, or all) of the satellite images (or further data) is unavailable. In particular, with regard satellite images sometimes satellite imagery for a particular area is not available or is significantly old or out of date. In these cases, the input to that particular encoder may simply be omitted and the corrections may be generated based on the data that is available. This is in contrast to a single encoder trained to receive a certain number of satellite images as part of the input, where suitable dummy input may need to be generated to take the place of available images.

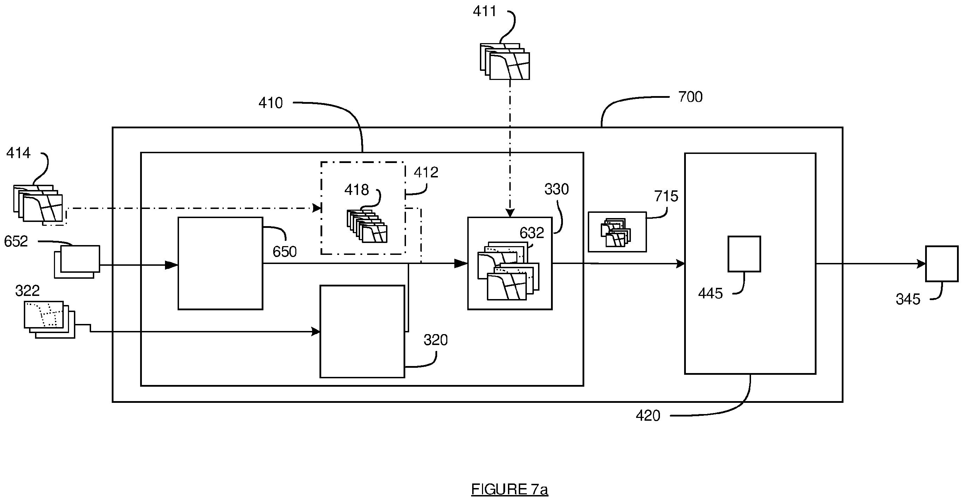

Figure 7a schematically illustrates a system 700 for training a road geometry correction model, such as the variant road geometry correction model of the variant system 600. The system 700 is a variant of the system 400 described above in relation to figure 4. The variant training system 400 comprises a training data module 410, and a training module 420. The description set out above in relation to figure 4 applies equally to the variant training system 700 and its components except where noted below.

The training data module 410 of the variant training system 700 further comprises a photographic image module 650. The discussion above of photographic image module 650 shown in figure 6 applies equally to photographic image module 650 shown here. The photographic image module 650 is arranged to obtain a respective photographic image 652 for each of the geographical areas represented in the set of road geometries. These photographic images 652 may be referred to as a set of photographic images 652. The discussion of the photographic image set out in relation to figure 6 above applies equally to photographic images 652 in the set of photographic images here.

The training data module 410 comprises a compositing module 330. The discussion above of the compositing module 330 shown in figure 6 applies equally to the compositing module 330 shown here. In particular, the compositing module 330 is arranged to form a plurality of composite images 632 from at least the set of road geometries 418; 411, the set of images of movement data 322, and the set of photographic images 652. As with the system 400 the module 412 is optional and the "set of road geometries" may be either the modified road geometries 418 (i.e. synthetic data) or the initial road geometries 411 (i.e. real-world data), or both. As such, each composite image 632 is formed by the compositing module 330 from an image of a road geometry of a given geographical area, the image of movement data for the given geographical area, and the photographic image of the given geographical area. The discussion of the composite image 632 set out in relation to figure 6 above applies equally to the composite images 632 here.

As such, the training data module 410 of the variant training system 700 is arranged to generate a training data set 715 in the same way as the training data module 410 of the training system 400 with the difference that the composite images 632 in the training data set 715 are composite images formed from images of the road geometry, images of movement data, and photographic images.

In this way it will be understood that, by using such a variant training data set 715, the training module 420 is arranged to train of the road geometry correction model 445 such that the trained road geometry correction model 345 is configured to generate as output road geometry corrections from an input composite image 635 of an initial road geometry, movement data, and a photographic image. It will be appreciated that the training techniques described previously apply equally to the training using the variant training data set 715.

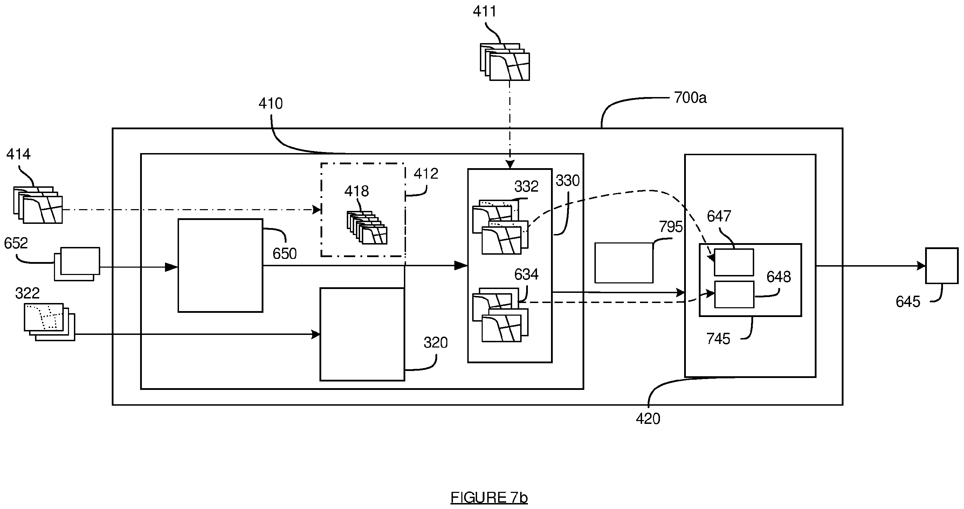

In a further variant training system 700a shown in figure 7b, the training module 420 is arranged to train the further variant road geometry correction model 645 of the further variant system 600a. As described above the further variant road geometry correction model 445 comprises two or more encoders 647; 648.

In the training data module 410 of the further variant training system 700a the compositing module 330 is arranged to form a first composite image 332 from the image 312 of the initial road geometry and the image 322 of the movement data (such as in the manner described above in relation to figure 3). The compositing module 330 is also arranged to form a second composite image 634 from the image 312 of the initial road geometry and the photographic image 652. The second composite image 634 may be formed in the same manner as the first composite image, but with the photographic image 652 used in place of the image 322 of the movement data.

As such the training data module 410 is arranged to generate a further variant training data set 795 in the same way as the training data module 410 of the training system 400 with the difference that the variant training data set comprises, for each composite image 332 formed from an image 312 of an road geometry and an image of movement data, a corresponding second composite image. The corresponding second composite image being formed from said image 312 of the road geometry and a corresponding photographic image 652.

In this further variant the training module 420 is arranged to train a variant road geometry correction model 745 using the variant training data set 795. The training module is thereby arranged to form a variant trained road geometry correction model 645 as discussed above. As will be appreciated the variant road geometry correction model 745 comprises two encoders 647; 648. The first encoder 647 for receiving a composite image formed of an image of an initial road geometry of the geographical area and an image of movement data of the geographical area (e.g. the first composite image 332). The second encoder 648 for receiving a composite image formed of an image of an initial road geometry of the geographical area and a photographic image of the geographical area (e.g. the second composite image 652). It will be appreciated that the training techniques described previously apply equally to the training using the further variant training data set 795.

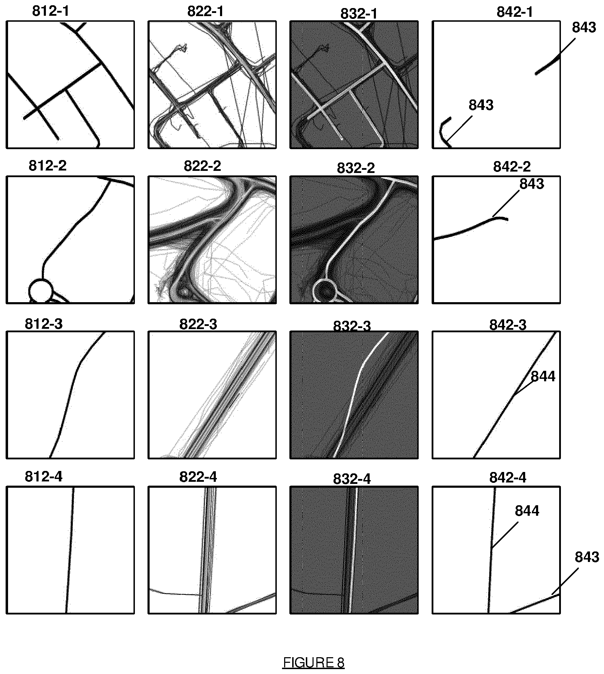

Figure 8 shows a number of examples of images that may be used in or generated by embodiments of the systems and methods described above.

Four images 822-1; 822-2; 822-3; 822-4 of movement data, each for a different geographical area are shown in figure 8. The images 822-1; 822-2; 822-3; 822-4 of movement data have been generated from probe data gathered form navigation systems in vehicles traversing the road networks in each geographical area. The images 822-1; 822-2; 822-3; 822-4 of movement data are heatmaps and are 512x512 (though it will be appreciated that larger or smaller images sizes may be used) pixel raster RGB images. The 822-1; 822-2; 822-3; 822-4 of movement data comprise three one bit binary channels corresponding to red, green and blue respectively. The colour of each pixel in the images 822-1; 822-2; 822-3; 822-4 of movement data signify the density of probes at a given location. Here red signifies high density, green signifies medium density, and blue signifies low density. The white areas are where no probes were recorded. It will be understood that for reproduction here the RGB images are show as greyscale.

Four corresponding images 812-1; 812-2; 812-3; 812-4 of initial road geometries are also shown. Each image 812-1; 812-2; 812-3; 812-4 of an initial road geometry shows to the same geographical area as the corresponding image 822-1; 822-2; 822-3; 822-4 of movement data. The images 812-1; 812-2; 812-3; 812-4 of initial road geometries are therefore 512x512 pixel raster images, each comprising a single one bit channel. In the images 812-1; 812-2; 812-3; 812-4 of initial road geometries a black pixel is where there is a road segment, and a white pixel is where there is not a road segment.

Four corresponding composite images 832-1; 832-2; 832-3; 832-4 are shown. These composite images are generated from the pairs of images 822-1; 822-2; 822-3; 822-4 of movement data and images 812-1; 812-2; 812-3; 812-4 of initial road geometries as described previously. For ease of graphical reproduction the composite images are shown as an alpha blending of the respective image of movement data and image of the initial road geometry. However, it will be appreciated that in this specific example the composite images are actually four channel 512x512 pixel raster images. In other words each composite image comprises the three channels of the image of the movement data and the single channel of the image of the initial road geometry.

The output images 842-1; 842-2; 842-3; 842-4 were generated from each composite image 832-1; 832-2; 832-3; 832-4 using an implementation of the system 300 described above. In this particular implementation the trained road geometry correction model 345 was a Unet++ image segmentation convolutional neural network trained using the Pytorch Deep Learning framework. The output images 842-1; 842-2; 842-3; 842-4 are 512x512 pixel RGB raster images, each comprising three one bit channels. The red lines (or pixels thereof) 843 indicate positions where a road segment is missing from the corresponding initial road geometry. The green lines (or pixels thereof) 844 indicate the new position where an existing road in the initial geometry should be moved - i.e. because the road is positioned incorrectly in the initial road geometry.

As can be seen from a visual comparison between the images 812-1 ; 812-2; 812-3; 812-4 of initial road geometries and the images 822-1; 822-2; 822-3; 822-4 of movement data, the output images accurately identify errors in the road geometry, based on significant probe densities occurring where there is no corresponding road segment. The output images also correctly ignore stray tracks or signals in the movement data which are likely due to GPS errors and/or occasional use of vehicles not on designated roads.

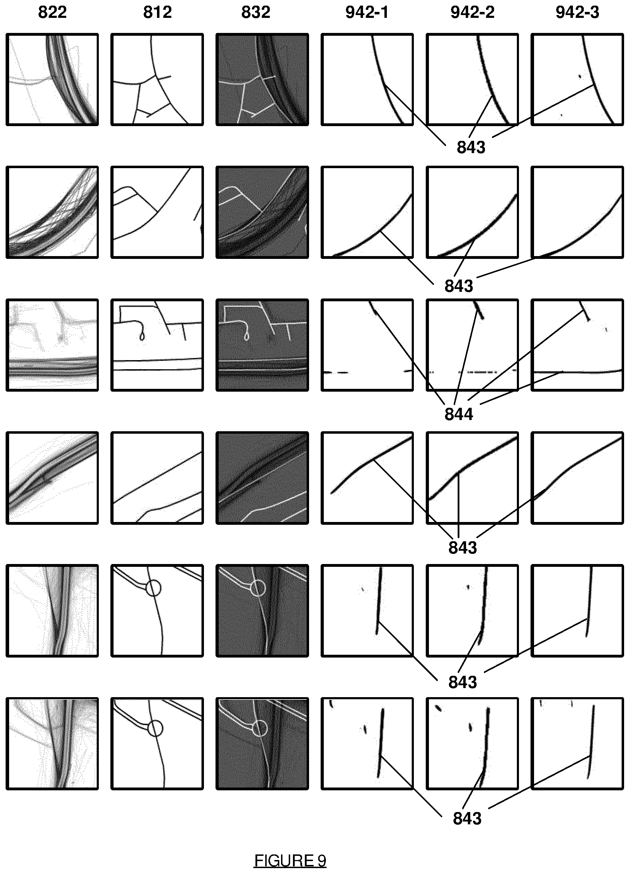

Figure 9 shows further examples images used and generated by further implementations of the above systems and methods.

A number of images 822 of movement data, corresponding images 812 of initial road geometries, and corresponding composite images 832 are shown in figure 9. The discussion of images of movement data, corresponding images of initial road geometries, and corresponding composite images apply equally to the images shown here.

In this case three different trained road geometry correction models were tested. These were:
- a Unet image segmentation convolutional neural network; which generated the first set of output images 942-1
- a Segformer B0 image segmentation convolutional neural network; which generated the second set of output images 942-2
- a Unet++ image segmentation convolutional neural network; which generated the third set of output images 942-3.

As with the output images shown in figure 8, the output images 942-1; 942-2; 942-3 shown here where generated by applying the particular trained road geometry correction model to the respective composite images 832. The output images 942-1; 942-2; 942-3 are 512x512 pixel RGB raster images, each comprising three one bit channels. The red lines (or pixels thereof) 843 indicate positions where a road segment is missing from the corresponding initial road geometry. The green lines (or pixels thereof) 844 indicate the new position where an existing road in the initial geometry should be moved - i.e. because the road is positioned incorrectly in the initial road geometry.

Again as can be seen from a visual comparison between the images the output images accurately identify errors in the road geometry.

The road geometry correction models were trained using a training set of synthetic modified road geometries. A further validation set of synthetic modified road geometries was also used to validate each trained geometry correction model. A F1 score (i.e. a harmonic mean of precision and recall) was calculated for each trained model. Also a Jaccard index (or the Intersect over Union score, IoU) was calculated for each trained model.

**Table 1**

| **Model Architecture** | **Training set** | | **Validation set** | |
|---|---|---|---|---|
| | F1-Score | IoU | F1-Score | IoU |
| **Unet** | 0.706 | 0.586 | 0.711 | 0.59 |
| **Segformer B0** | 0.695 | 0.571 | 0.709 | 0.585 |
| **Unet++** | 0.751 | 0.634 | 0.741 | 0.623 |

As can be seen from table 1 each of the image segmentation models tested achieved acceptable validation scores, with Unet++ being the preferred image segmentation model.

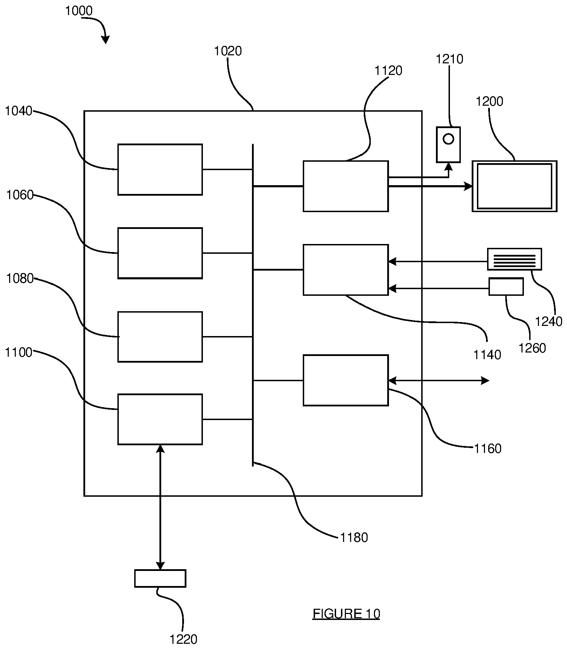

Figure 10 schematically illustrates an example of a computer system 1000. The system 1000 comprises a computer 1020. The computer 1020 comprises: a storage medium 1040, a memory 1060, a processor 1080, an interface 1100, a user output interface 1120, a user input interface 1140 and a network interface 1160, which are all linked together over one or more communication buses 1180.

The storage medium 1040 may be any form of non-volatile data storage device such as one or more of a hard disk drive, a magnetic disc, an optical disc, a ROM, etc. The storage medium 1040 may store an operating system for the processor 1080 to execute in order for the computer 1020 to function. The storage medium 1040 may also store one or more computer programs (or software or instructions or code).

The memory 1060 may be any random access memory (storage unit or volatile storage medium) suitable for storing data and/or computer programs (or software or instructions or code).

The processor 1080 may be any data processing unit suitable for executing one or more computer programs (such as those stored on the storage medium 1040 and/or in the memory 1060), some of which may be computer programs according to embodiments of the invention or computer programs that, when executed by the processor 1080, cause the processor 1080 to carry out a method according to an embodiment of the invention and configure the system 1000 to be a system according to an embodiment of the invention. The processor 1080 may comprise a single data processing unit or multiple data processing units operating in parallel or in cooperation with each other. The processor 1080, in carrying out data processing operations for embodiments of the invention, may store data to and/or read data from the storage medium 1040 and/or the memory 1060.

The interface 1100 may be any unit for providing an interface to a device 1220 external to, or removable from, the computer 1020. The device 1220 may be a data storage device, for example, one or more of an optical disc, a magnetic disc, a solid-state-storage device, etc. The device 1220 may have processing capabilities - for example, the device may be a smart card. The interface 1100 may therefore access data from, or provide data to, or interface with, the device 1220 in accordance with one or more commands that it receives from the processor 1080.

The user input interface 1140 is arranged to receive input from a user, or operator, of the system 1000. The user may provide this input via one or more input devices of the system 1000, such as a mouse (or other pointing device) 1260 and/or a keyboard 1240, that are connected to, or in communication with, the user input interface 1140. However, it will be appreciated that the user may provide input to the computer 102 via one or more additional or alternative input devices (such as a touch screen). The computer 1020 may store the input received from the input devices via the user input interface 1140 in the memory 1060 for the processor 1080 to subsequently access and process, or may pass it straight to the processor 1080, so that the processor 1080 can respond to the user input accordingly.

The user output interface 1120 is arranged to provide a graphical/visual and/or audio output to a user, or operator, of the system 1000. As such, the processor 1080 may be arranged to instruct the user output interface 1120 to form an image/video signal representing a desired graphical output, and to provide this signal to a monitor (or screen or display unit) 1200 of the system 1000 that is connected to the user output interface 1120. Additionally or alternatively, the processor 1080 may be arranged to instruct the user output interface 1120 to form an audio signal representing a desired audio output, and to provide this signal to one or more speakers 1210 of the system 1000 that is connected to the user output interface 1120.

Finally, the network interface 1160 provides functionality for the computer 1020 to download data from and/or upload data to one or more data communication networks.

It will be appreciated that the architecture of the system 1000 illustrated in figure 10 and described above is merely exemplary and that other computer systems 1000 with different architectures (for example with fewer components than shown in figure 10 or with additional and/or alternative components than shown in figure 10) may be used in embodiments of the invention. As examples, the computer system 1000 could comprise one or more of: a personal computer; a server computer; a mobile telephone; a tablet; a laptop; a television set; a set top box; a games console; other mobile devices or consumer electronics devices; an in-car entertainment system; an in-car navigation system; etc.

The systems described in relation to figures 2, 4, 6 ,7a and 7b may each be implemented as (or executed with) one or more computer systems such as the system 1000 described above. Similarly, the navigation clients referred to above may be implemented as (or executed with) one or more computer systems such as the system 1000.

It will be appreciated that the methods described have been shown as individual steps carried out in a specific order. However, the skilled person will appreciate that these steps may be combined or carried out in a different order whilst still achieving the desired result.

It will be appreciated that embodiments of the invention may be implemented using a variety of different information processing systems. In particular, although the figures and the discussion thereof provide an exemplary computing system and methods, these are presented merely to provide a useful reference in discussing various aspects of the invention. Embodiments of the invention may be carried out on any suitable data processing device, such as a personal computer, laptop, personal digital assistant, mobile telephone, set top box, television, server computer, etc. Of course, the description of the systems and methods has been simplified for purposes of discussion, and they are just one of many different types of system and method that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or other hardware arrangements. Method steps implemented in flowcharts contained herein, or as described above, may each be implemented by corresponding respective modules; multiple method steps implemented in flowcharts contained herein, or as described above, may be implemented together by a single module.

It will be appreciated that, insofar as embodiments of the invention are implemented by a computer program, then a storage medium and a transmission medium carrying the computer program form aspects of the invention. The computer program may have one or more program instructions, or program code, which, when executed by a computer carries out an embodiment of the invention. The term "program" as used herein, may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

## Claims

1. A method for identifying changes in road geometry, the method comprising:
obtaining an image of an initial road geometry for a geographical area;
obtaining an image of movement data for the geographical area;
forming a composite image from at least the image of initial road geometry and the image of movement data;
generating an image of road geometry corrections by applying a trained road geometry correction model to the composite image, wherein the image of road geometry corrections identifies one or more differences between the actual road geometry of the geographical area and the initial road geometry.

2. The method of claim 1 wherein the trained road geometry correction model comprises convolutional encoder-decoder neural network.

3. The method of claim 1 or 2 wherein the composite image comprises at least one channel corresponding to the initial road geometry and at least one other channel corresponding to movement data

4. The method of any proceeding claim wherein the composite image is formed from the image of initial road geometry, the image of movement data, and a satellite image of the geographical area.

5. The method of any one of claims 1-3 wherein the method comprises forming a further composite image from the image of initial road geometry and a satellite image of the area, wherein the trained road geometry correction model is applied to the composite image and the further composite image to generate the image of road geometry corrections, optionally wherein the trained road geometry correction model comprises:
a first encoder arranged to receive as input a composite image comprising at least one channel corresponding to an initial road geometry and at least one other channel corresponding to movement data;
a second encoder arranged to receive as input a further composite image comprising at least one channel corresponding to an initial road geometry and at least one other channel corresponding to a satellite image.

6. The method of any proceeding claim wherein the image of an initial road geometry is an image mask.

7. The method of any proceeding claim wherein the one or more differences comprises any of:
a road segment present in the actual road geometry and not present in the initial road geometry;
a road segment present in the initial road geometry and not present in the actual road geometry;
a road segment displaced in the actual road geometry relative to the initial road geometry

8. The method of any proceeding claim wherein the method further comprises updating the initial road geometry according to the image of road geometry corrections to form an updated road geometry for the geographical area.

9. A method of training a neural network for identifying road geometry corrections, the method comprising:
obtaining a set of known road geometries for a plurality of geographical areas;
obtaining a set of images of movement data for the plurality of geographical areas;
modifying the known road geometries to form a set of modified road geometries,
forming a plurality of composite images from at least the set of modified road geometries and the set of images of movement data, each composite image formed from a image of a respective modified road geometry of a respective geographical area and the image of movement data for the respective geographical area;
labelling each composite image based on the difference between the modified road geometry of the composite image and the corresponding known road geometry to form a set of labelled composite images;
training a road geometry correction model according to the set of labelled composite images such that the trained road geometry correction model is configured to generate as output an image of road geometry corrections from an input composite image of an initial road geometry and movement data, optionally wherein modifying a known road geometry comprises any of:
adding a road segment to the known road geometry;
deleting a road segment from the known road geometry;
translating a road segment of the known road geometry.

10. The method of claim 9 wherein each composite image is formed from a image of a respective modified road geometry of a respective geographical area, the image of movement data for the respective geographical area, and a satellite image of the respective geographical area.

11. The method of claim 9 wherein the method comprises for each composite image forming a respective further composite image from the image of the respective modified road geometry of the respective geographical area and a satellite image of the respective geographical area, optionally wherein the road geometry correction model comprises:
a first encoder arranged to receive as input a composite image comprising at least one channel corresponding to an initial road geometry and at least one other channel corresponding to movement data;
a second encoder arranged to receive as input a further composite image comprising at least one channel corresponding to an initial road geometry and at least one other channel corresponding to a satellite image.

12. The method of any preceding claim wherein the trained road geometry correction model is an image segmentation model, optionally wherein the trained road geometry correction model is any one of: Unet; Segformer 80; Unet++.

13. The method of any preceding claim wherein the movement data comprises a plurality of historical journeys in the geographical area, optionally wherein (a) each element of the image of movement data indicates an amount of historical journeys that traversed the respective portion of the geographical area corresponding to said element, or (b) the image of vehicle movement data is a heat map of historical journeys in the geographical area.

14. The method of any preceding claim further comprising updating the trained road geometry correction model based on a plurality of human generated road geometry corrections, optionally wherein the plurality of human generated road geometry corrections are prompted by a corresponding road geometry correction generated using the trained road geometry correction model.

15. An apparatus arranged to carry out a method according to any one of claims 1 to 14.

16. A computer-readable medium storing a computer program which, when executed by a processor, causes the processor to carry out a method according to any one of claims 1 to 14.
